# EUROPEAN PATENT SPECIFICATION

(11) **EP 3 945 234 B1**
(45) Date of publication and mention of the grant of the patent: **31.05.2023**
(21) Application number: 20188198.4
(22) Date of filing: 28.07.2020
(51) Int. Cl.: F16M 11/04, F16M 13/02, H04N 5/64

(54) **DISPLAY DEVICE**
ANZEIGEVORRICHTUNG
DISPOSITIF D'AFFICHAGE

(43) Date of publication of application: 02.02.2022
(73) Proprietor: Vestel Elektronik Sanayi ve Ticaret A.S., 45030 Manisa (TR)
(72) Inventor: ADALI,, Ahmet Salih, 45030 Manisa (TR)
(74) Representative: Flint, Adam

(56) References cited:
- EP-A1- 3 081 841
- CN-A- 102 384 348
- KR-A- 20080 012 663
- KR-B1- 100 777 078
- TW-A- 201 212 651
- US-A1- 2008 087 790
- US-A1- 2016 143 160

## Description

### Technical Field

The present disclosure relates to a display device.

### Background

Display devices, including for example television sets, computer screens or "monitors", etc., often have stands to allow the display device to be supported on a horizontal surface, such as a desk or table or specialist audio/TV cabinet or shelving arrangement. On the other hand, display devices are often mounted to a wall or other vertical surface. In such a case, the stand is not used. This means that the stand that is commonly provided by the manufacturer is put away for storage. If the display device needs to be removed from the wall and mounted on a horizontal surface, the user has to locate the stand again. The reality is that often, the stands are simply lost or misplaced or even discarded, meaning the user cannot mount the display device on a horizontal surface or has to purchase another stand.

KR100777078B1 discloses a stand and wall-hanging type rotation control device which can be used as a stand type and a wall-hanging type for an LCD (Liquid Crystal Display) or a PDP(Plasma Display Panel) or the like.

US20080087790A1 discloses a brace stand and an electronic device for using the same. The brace stand and the electronic device for using the same comprise an electronic device, a brace structure and a base. The base has a tail portion including a hook, wherein the base is able to rotate between a brace position and a folding area.

TW201212651A discloses a display device which includes a main body and a support structure. The support structure includes a rail module, a support frame and a bottom base. The bottom base is pivotally connected with a bottom end of the support frame, and pivots to form at least two included angles of 90 and 180 degrees.

CN102384348A discloses a wall-mountable television base which includes a base, a base support, a wall-mounting frame and a wall-mounting wall fixing piece, wherein the base is connected with the base support in a hinged manner, the base support is connected with the back of a display screen in a sliding manner in the vertical direction, and the wall-mounting frame is fixed on the back of the display screen and hooked on the wall-mounting wall fixing piece.

### Summary

According to an aspect disclosed herein, there is provided a display device, the display device having a front and a rear and comprising:
a housing;
a display screen supported by the housing to be located at the front of the display device, the housing being at the rear of the display device; and
a stand, the stand comprising a base and a neck, wherein the neck is connected to the housing and the base is connected to the neck;
the base and the neck being configurable relative to each other such that the stand is configurable between a first configuration and a second configuration;
wherein in the first configuration, with the display screen arranged generally vertically, the base is below the display screen and is generally horizontal such that the stand is suitable for supporting the display device on a generally horizontal surface with the base on said generally horizontal surface; and
wherein in the second configuration, with the display screen arranged generally vertically, the base and the neck are arranged generally vertically such that the display device can be mounted to a generally vertical surface;
characterised in that the neck is connected to the base at an edge of the base and in that the neck is configurable such that, in the first configuration, the neck is angled downwardly and rearwardly to extend to the rear of the display device and the base extends horizontally to extend to the front and to the rear of the display device.

The stand can be reconfigured according to whether the display device is being supported on a generally horizontal surface, such as a table or desk or specialist audio/TV cabinet or shelving arrangement or the like, or is mounted to a generally vertical surface, such as a wall. The stability of the stand in the first configuration can be maximised.

In an example, the display device is arranged such that in the second configuration, the base and the neck are generally collinear.

This can help minimise the lateral extent of the stand, from front to back, which facilities mounting the display device to a generally vertical surface.

In an example, the display device is arranged such that in the second configuration, the base can be at least partially slid into the neck to reduce the vertical extent of the stand.

This shortens the overall length of the stand, which is preferred when the stand is in the second configuration.

In an example, the display device is arranged such that the neck can be at least partially slid into the housing for the second configuration.

This enables the stand to be at least partially stowed within the housing in the second configuration. The housing and/or the rear of the display screen may have guide slots or channels or the like in which the neck is mounted for sliding movement relative to the housing.

In an example, the base comprises at least one loudspeaker.

The base in this example provides a convenient location for a loudspeaker, which can be used to output audio for the display device.

In an example, the display device is arranged such that in the first configuration, the loudspeaker is below and in front of the display screen.

In an example, the display device is arranged such that in the second configuration, the loudspeaker is below the display screen.

In these examples, whether the stand is in the first or second configuration, the loudspeaker is always "visible" to the viewer, so that the sound that is output by the loudspeaker has an unobstructed path to the viewer.

In an example, the base comprises a plurality of loudspeakers, the loudspeakers and the base being arranged such that in the first configuration, sound is directed generally horizontally from the front towards a viewer and generally vertically upwards, and such that in the second configuration, sound is directed generally horizontally from the front towards a viewer and generally vertically downwards.

This further assists in ensuring that sound is directed appropriately for the viewer in the first and second configurations.

In an example, the neck is detachably connected to the housing so that the neck can be disconnected from the housing and connected to the housing again when the stand is reconfigured between the first and second configurations.

In an example, the base is detachably connected to the neck so that the base can be disconnected from the neck and connected to the neck again when the stand is reconfigured between the first and second configurations.

The various detachable parts can be fixed together using screws or pins or the like, which enable the parts to be simply detached and reattached as necessary for the first and second configurations. There is no need for complicated and expensive arrangements of hinges and springs or the like to support the stand in different configurations.

### Brief Description of the Drawings

To assist understanding of the present disclosure and to show how embodiments may be put into effect, reference is made by way of example to the accompanying drawings in which:
Figures 1A to 1C respectively show schematically a side view, front view and rear view of an example of a display device according to the present disclosure in a first configuration;
Figures 2A to 2C respectively show schematically a side view, front view and rear view of the example of a display device according to the present disclosure in a second configuration;
Figure 3 shows schematically an exploded view of the display device;
Figure 4 shows schematically an exploded view of the stand of the display device;
Figure 5 shows schematically the display device in a number of stages during reconfiguration of the stand between the first and second configurations;
Figures 6A to 6C show schematically detailed views of the stand in a number of stages during reconfiguration of the stand between the first and second configurations; and
Figures 7A and 7B shown show schematically perspective views of an example of the stand in the first and second configurations to show the position and orientation of a sound bar.

### Detailed Description

Examples described herein provide a display device that has a front and a rear. The display device has a housing. A display screen is supported by the housing to be located at the front of the display device, the housing being at the rear of the display device. The display device has a stand, the stand comprising a base and a neck. The neck is connected to the housing and the base is connected to the neck. The base and the neck are configurable relative to each other such that the stand is configurable between a first configuration and a second configuration. In the first configuration, with the display screen arranged generally vertically, the base is below the display screen and is generally horizontal such that the stand is suitable for supporting the display device on a generally horizontal surface with the base on said generally horizontal surface. In the second configuration, with the display screen arranged generally vertically, the base and the neck are arranged generally vertically such that the display device can be mounted to a generally vertical surface.

The stand can be reconfigured according to whether the display device is being supported on a generally horizontal surface, such as a table or desk or specialist audio/TV cabinet or shelving arrangement or the like, or is mounted to a generally vertical surface, such as a wall or vertical panel or the like. This means that the stand is always associated with the display device, and does not need to be removed and stored separately when the display device is mounted to a wall or the like. Rather, the stand is always attached to the remainder of the display device, whether the display device is mounted on a horizontal or a vertical surface. The stand is reconfigured according to whether the display device is mounted on a horizontal or a vertical surface.

It will be understood that "horizontal" and "vertical" are used herein as somewhat general terms. For example, a surface does not need to be exactly or literally "horizontal" or "vertical", though in practice such surfaces are often at least close to horizontal or vertical of course. Similarly, the display screen does not need to be exactly or literally "vertical" in use, though in practice display screens are often positioned to be at least close to vertical.

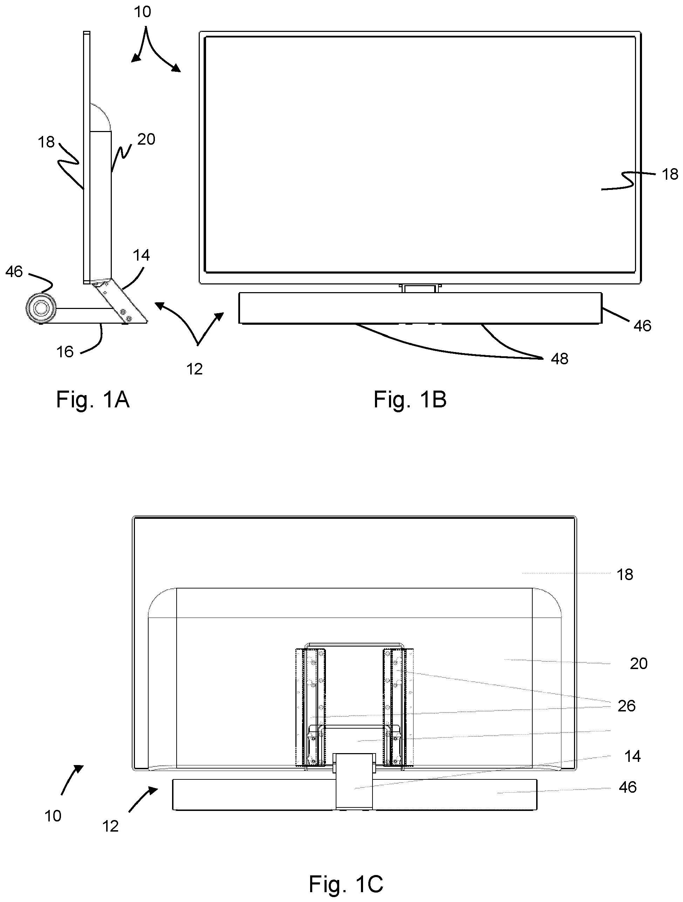

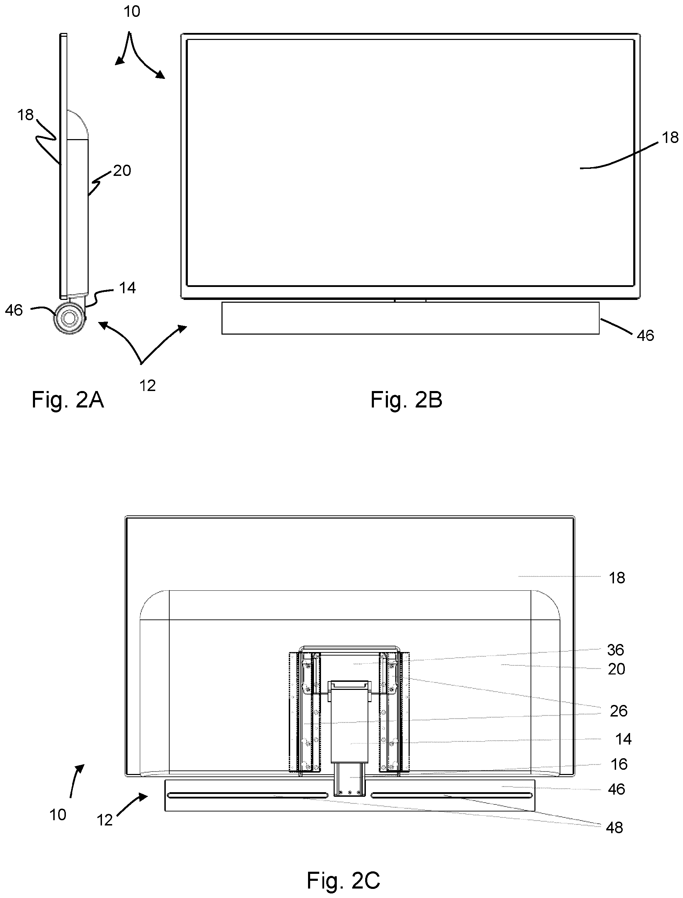

Reference is made first to Figures 1 and 2, which respectively show an example of a display device 10 according to an embodiment of the present disclosure in the first and second configurations. Figures 1A to 1C and Figures 2A to 2C respectively show schematically a side view, front view and rear view of the display device 10 in the first and second configurations. In the first configuration shown in Figure 1, the display device 10 can be placed on a horizontal surface. In the second configuration shown in Figure 2, the display device 10 can be mounted on a vertical surface.

The display device 10 has a stand 12. The stand 12 has two main parts, namely a neck 14 and a base 16. Whilst the base 16 is referred to as a "base" herein, this is in part a matter of language to distinguish this part from the neck 14. As will be clear, the base 16 functions as a base of the stand 12 when the stand 12 is in the first configuration. When the stand 12 is in the second configuration, the base 16 is not acting as a base as such.

Broadly speaking, the neck 14 and the base 16 are each rectangular cuboids in this example, though other shapes are possible. For example, one or both of the neck 14 and the base 16 may have a cross-sectional shape that is square or rectangular or some other polygonal shape, or circular or oval, etc. As discussed further below, in an example, the neck 14 and the base 16 are constructed and arranged so that the base 16 can be at least partially received within the neck 14 (or equivalently the neck 14 , can be at least partially received within the base 16) when the stand 12 is in the second configuration. For this, the neck 14 and the base 6 can be configured to be generally collinear. That is, the longitudinal axes Xn and Xb of the neck 14 and the base 16 can be aligned to be generally parallel or collinear for the second configuration.

The display device 10 has a display screen 18 which is provided towards the front of the display device 10. The display screen 18 may in general use any suitable display technology to display images on the display area, including for example backprojection; LCD (liquid crystal display) or quantum dot with an LED (light emitting diode) or other backlight; emissive elements such as LEDs, OLEDs (organic LEDs), plasma; etc.

The display device 10 has a housing 20. The housing 20 supports the display screen 18 and contains the usual processor, memory, data storage, etc. and, in the case of a television set, a TV tuner, etc. The display screen 18 is mounted in and supported by the housing 20 to be at the front of the display device 10. The housing 20 forms the rear of the display device 10.

As will be discussed, to reconfigure the stand 12 between the first (horizontal surface) and the second (vertical surface) configurations, in an example the neck 14 and the base 16 are disassembled, manipulated as necessary and reassembled. In the first configuration (Figures 1), with the display screen 18 arranged generally vertically, the base 16 is below the display screen 18 and is generally horizontal such that the stand 12 is suitable for supporting the display device 10 on a generally horizontal surface with the base 16 sitting on the generally horizontal surface. More specifically, in this example, in the first configuration the neck 14 is angled downwardly and rearwardly to extend somewhat to the rear of the display device 10. The base 16 extends horizontally, to extend somewhat to the front and to the rear of the display device 10. In the second configuration (Figures 2), with the display screen 18 arranged generally vertically, the neck 14 and the base 16 are generally parallel or collinear and are arranged generally vertically such that the display device 10 can be mounted to a generally vertical surface.

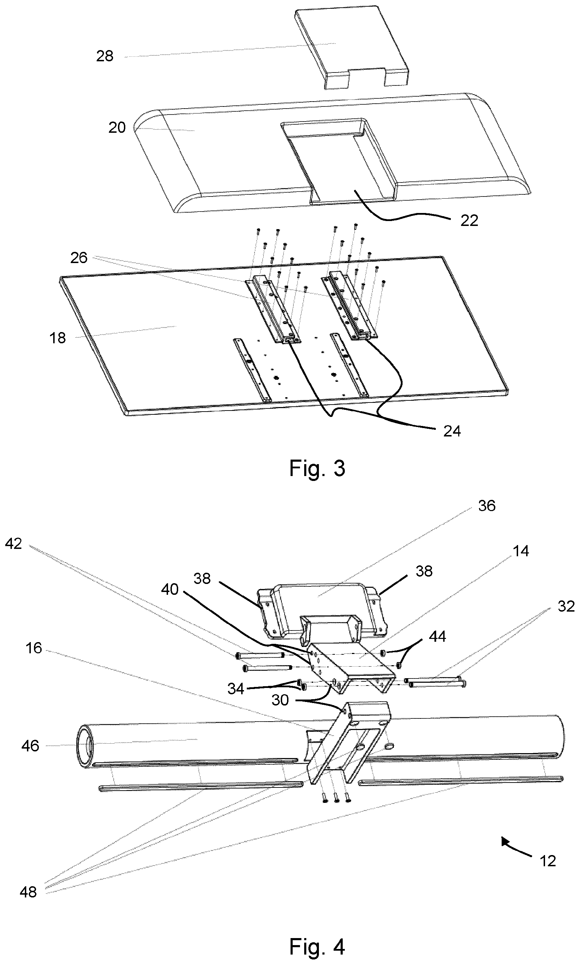

Referring now particularly to Figure 3, this shows schematically an exploded view of the display device 10, with the housing 20 shown separately from the display screen 18 and with the stand 12 omitted for clarity. The housing 20 has a recess 22 which is open to the rear of the display device 10. The recess 22 is generally a square or rectangular U-shape and is open at its lowermost end. As will be explained, the recess 22 provides a volume in which the stand 12 can move and which can partially receive the stand 12.

To guide the movement of the stand 12 during reconfiguration, and also to help secure the stand to the remainder of the display device 10, the housing 20 and/or the rear of the display screen 18 has guide slots or channels 24 with which the stand 12 engages in use. In the example shown, the guide slots or channels 24 are provided by two rigid elongate strips 26 on the rear of the display screen 18. It is preferred that the strips 26 are on the display screen 18 so that the stand 12 attaches to the display screen 18 (rather than to the housing 18 say) as normally the display screen 18 is the heaviest part of the display device 10 and therefore needs the greatest support from the stand 12. The strips 26 each have a generally U-shape cross-sectional shape and are arranged generally parallel and vertically (i.e. running in the direction from top to bottom of the display device 10) so that the guide slots or channels 24 provided by the U-shape cross-sectional shapes of the strips 26 oppose each other. The recess 22 in the housing 20 and the strips 26 are arranged so that the channels 24 are at the vertical sides of the recess 22. A removable cover 28 can be clipped or otherwise fitted to the housing 20 to cover the recess 22 and can be removed to allow access to the recess 22.

Referring now particularly to Figure 4, this shows schematically an exploded view of the stand 12. The neck 14 and the base 16 can be connected to each other and disconnected from each other during reconfiguration of the stand 12. For this purpose, in this example the neck 14 and the base 16 are each provided with a number of sets of through holes 30 at different locations. For example, there may be through holes 30 at each end of the neck 14 and the base 16, those ends being adjacent each other in the assembled stand 12, and further through holes 30 may be provided along the length of one or both of the neck 14 and the base 16, for example towards the other end of the neck 14 and/or the base 16. The base 16 can be partially received within the adjacent end of the neck 14, or, equivalently, the end of the neck 14 can be partially received within the adjacent end of the base 16. Locking pins 32 are passed through one or other of the sets of through holes 30 in the neck 14 and the base 16 as appropriate to lock the neck 14 and the base 16 in the desired orientation relative to each other according to the first (horizontal support) or second (vertical support) configuration. As will become clear, the location of the sets of through holes 30 is such that the neck 14 and the base 16 are locked together when correctly orientated according to the first or second configuration. End caps or nuts 34 or the like can be fitted to the free ends of the locking pins 32 to lock them in position.

A slider 36 is connected to the other end of the neck 14. The slider 36 is generally planar. The slider 36 has opposed flanges 38 at each vertical side which in use are received in the channels 24 provided by the strips 26 at the rear of the display screen 18 to guide the sliding movement of the slider 36 in the recess 22. Further, the slider 36 and the adjacent end of the neck 14 have a number of sets of through holes 40 at different locations. Locking pins 42 are passed through one set or the other of the through holes 40 to lock the neck 14 and the slider 36 in the desired orientation relative to each other according to the first (horizontal support) or second (vertical support) configuration. As will become clear, the location of the through holes 40 is such that the neck 14 and the slider 36 are correctly orientated according to the first or second configuration. End caps or nuts 44 or the like can be fitted to the free ends of the locking pins 42 to lock them in position.

It is mentioned here that instead of using removable locking pins 32, 42 to detachably lock the neck 14 and base 16 together and/or to detachably lock the neck 14 and the slider 36 together in the first and second configurations, a system of fixed hinges between one or both of the neck 14 and the base 16 and the neck 14 and the slider 36 may be used to allow the neck 14 and the base 16 and the neck 14 and the slider 36 respectively to pivot relative to each other. Such a system of fixed hinges may be used in conjunction with one or more springs which are used to balance and support the stand, such as used in balanced-arm or "angle poise" lamps, and indeed as used in some stands for computer screens. However, whilst fixed hinges and balance springs are convenient if the stand 12 is to be reconfigured frequently, in the present case it is considered that users will change the display device 10 from being wall-mounted to being mounted on a horizontal surface or vice versa only occasionally or even rarely. Therefore, it is preferred to use removable locking pins 32, 42 and the through holes 30, 40 as this keeps down the weight of the stand 12 and also keeps down the manufacturing cost and complexity of the stand 12.

In the example shown, the stand 12 also supports one or more loudspeakers for outputting audio. In this example, the one or more loudspeakers are mounted in or supported by a housing 46, which may also be referred to as a sound bar 46. The sound bar 46 is attached to the free end of the base 16, that is, the end of the base 16 that is remote from the neck 14. The sound bar 46 in this example is elongate and extends laterally to each side of the neck 14 and contains plural loudspeakers (not shown). For example, there may be at least one loudspeaker at or towards each end of the sound bar 46 so as to enable stereo audio to be output. Alternatively or additionally, there may be a single, centrally mounted loudspeaker in the sound bar 46.

Finally, as can be seen most clearly in Figure 4, one or both of the base 16 and the sound bar 46 are provided with feet or strips 48. The feet or strips 48 in use provide a high friction surface to engage with the horizontal surface, such as a table or desk or specialist audio/TV cabinet or shelving arrangement or the like, in the first configuration. Such feet or strips 48 can also help to reduce transmission of vibrations between the display device 10 and the horizontal surface. The feet or strips 48 may be formed of for example a natural or synthetic elastomeric material, including for example natural or synthetic rubber.

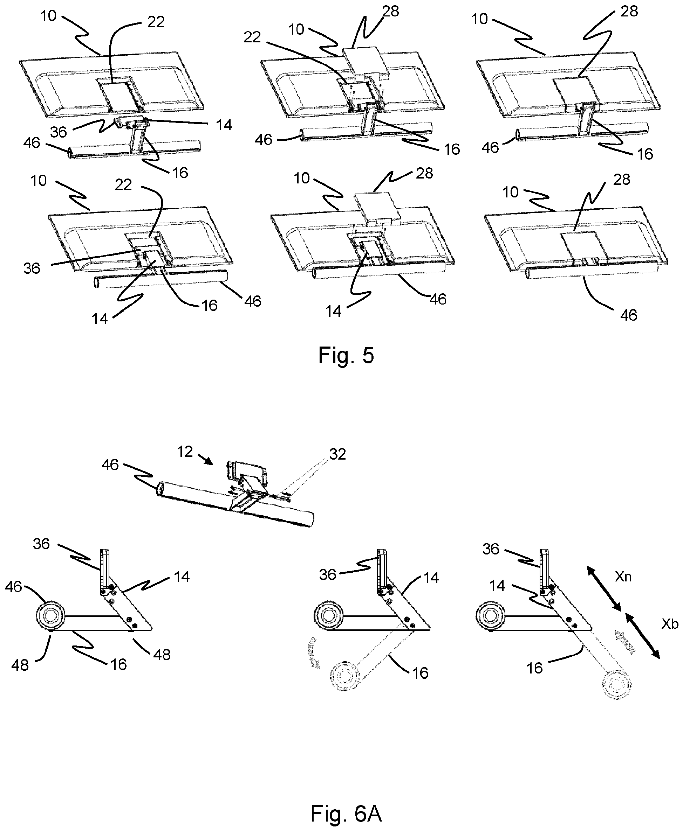

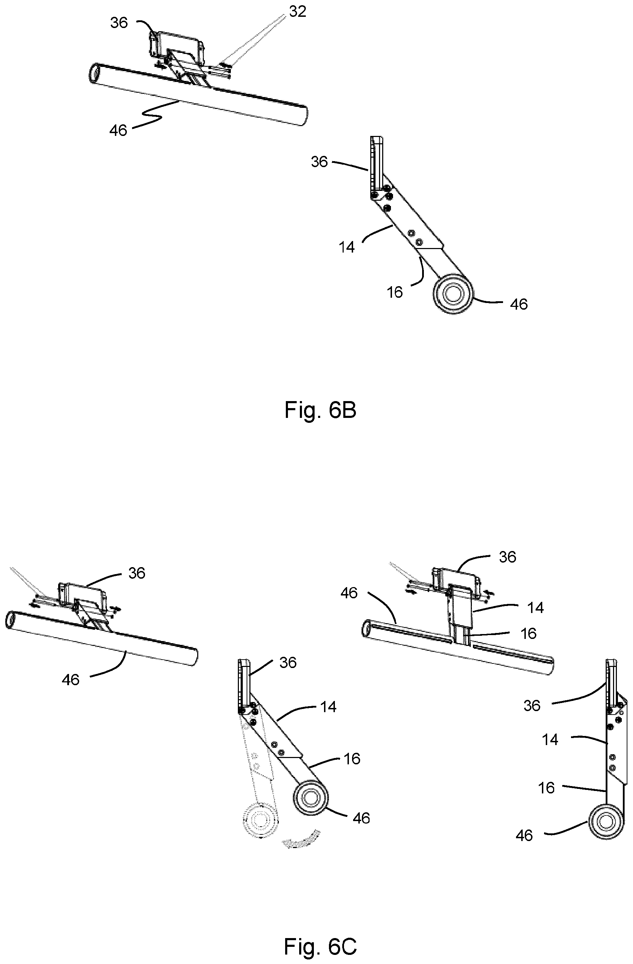

Referring now to Figure 5, this shows schematically the display device 10 in a number of stages during reconfiguration of the stand between the first and second configurations. A more detailed discussion of the steps required in this example to reconfigure the display device 10 and stand 12 will be given with reference to Figures 6.

At the top right of Figure 5, the display device 10 is in the first configuration, suitable to be mounted on a horizonal surface. Moving to the left in Figure 5, the cover 28 is removed to allow access to the recess 22. Moving to the left in Figure 5 again, the slider 36 is then removed from the recess 22, that is, the flanges 38 are slid out of the channels 24 provided by the guide strips 26. The slider 36 may have been fixed in position in the recess 22 using locking pins or screws which are fitted or screwed into the rear of the display screen 18, and such locking pins or screws are removed in order to free the slider 36 from the guide strips 26. In this regard, it is convenient for the user if the slider 36 can be removed entirely from the recess 22 as it is then easier for the user to manipulate the various parts as necessary to enable the stand 12 to be reconfigured. However, in other examples, this is not necessary and the slider 36 may always be fixed in the recess 22 with the flanges 38 always engaging the channels 24 provided by the guide strips 26.

Moving down to the bottom left of Figure 5, the various parts of the stand 12 have been reconfigured, as will be discussed further below, so that the stand 12 is in the second configuration, suitable to allow the display devoice 10 to be mounted on a vertical surface. The slider 36 is positioned back in the recess 22 if the slider 36 was previously removed from the recess 22. Moving to the right in Figure 5, the slider 36 is moved to the top of the recess 22. The slider 36 can be fixed in position using locking pins or screws which in this example are fitted or screwed into the rear of the display screen 18. Moving further to the right in Figure 5 to the bottom right, the cover 28 can then be clipped back in position to cover the recess 22 and to cover the majority of the parts of the stand 12, including in particular the slider 36 and the neck 14, as well as the uppermost part of the base 16.

As can be seen by comparing for example Figure 1 and Figure 2, and likewise by comparing the top right and the bottom right of Figure 5, the first and second configurations for the stand 12 are arranged so as to maximise the support function provided by the stand 12 in the first configuration whilst minimising the depth (front to back) of the stand 12 in the second configuration. This means that even in the second configuration, the stand 12 can remain associated with the remainder of the display device 10, and indeed is partly stowed in the housing 20 of the display device 10. The stand 12 does not need to be removed and stored separately when the user mounts the display device 12 on a vertical surface.

Referring now to Figures 6A to 6C, these show schematically detailed views of the stand 12 in a number of stages during reconfiguration of the stand 12 between the first and second configurations.

Referring first to Figure 6A, the stand 12 is initially in the first configuration, suitable for supporting the display device 10 on a generally horizontal surface. In this configuration, the neck 14 is angled downwardly and rearwardly to extend somewhat to the rear of the display device 10. Further, in this configuration, the base 16 extends horizontally to extend somewhat to the front and to the rear of the display device 10. Finally, in this example which has a sound bar 46 supported by the base 16, the sound bar 46 is located below and forwardly of the display screen 18. The feet or strips 48 on the base 16 and/or the sound bar 46 are located lowermost so as to be able to contact the horizontal support surface in the first configuration.

The locking pins 32 that lock the neck 14 and base 16 together are removed. The base 16 can then be repositioned (effectively, rotated) so that the neck 14 and the base 16 are parallel and in essence collinear. That is, the longitudinal axes Xn and Xb of the neck 14 and the base 16 are aligned to be collinear. The base 16 can then be slid at least partially, and optionally practically fully, into the neck 14 to reduce the overall length of the stand, as shown to the right of Figure 6A.

Referring next to Figure 6B, the locking pins 32 are then passed through the neck 14 and the base 16 to lock them together again. For this, the appropriate set of through holes 30 in the neck 14 and/or the base 16 are used for the locking pins 32 to pass through so that the neck 14 and the base 16 can be locked together with the neck 14 and the base 16 parallel and in essence collinear with each other and with the base 16 at least partially within the neck 14.

Referring next to Figure 6C, the neck 14 is repositioned (effectively, rotated) relative to the slider 36 so that the neck 14 and the slider 36 are parallel and in essence collinear. In this example, the locking pins 42 that lock the neck 14 and the slider 36 are removed to allow movement of the neck 14 relative to the slider 36. The neck 14 is rotated to be aligned with the slider 36. The locking pins 42 are then passed through the neck 14 and the slider 36 to lock them together again. For this, as for the connection of the neck 14 to the base 16, the appropriate set of through holes 40 in the neck 14 and/or the slider 36 are used for the locking pins 42 to pass through so that the neck 14 and the slider 36 can be locked together with the neck 14 and the slider 36 parallel and in essence collinear with each other. The final, second configuration for the stand 12, which is suitable for when the display device 10 is to be mounted on a vertical surface, is shown in the bottom right of Figure 6C.

The effect of reconfiguring the stand 12 is that in the first configuration, with the display screen 18 arranged generally vertically, the base 16 is below the display screen 18 and is generally horizontal such that the stand 12 is suitable for supporting the display device 10 on a generally horizontal surface with the base 16 on said generally horizontal surface; and, in the second configuration, with the display screen 18 arranged generally vertically, the base 16 and the neck 14 are arranged generally vertically such that the display device 10 can be mounted to a generally vertical surface.

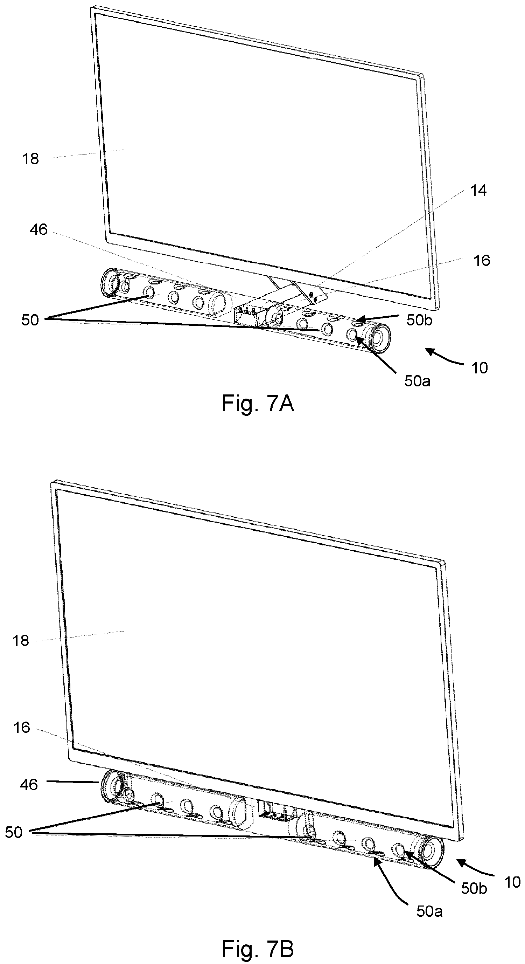

Further, and referring particularly to Figures 7A and 7B, in this example which has a sound bar 46 or other support at the free end of the base 16 for one or more loudspeakers, in the first configuration and the second configuration, the sound bar 46 is always positioned below the display screen 18 and is always "visible" to the user who is in front of the display screen 18. Therefore, the sound that is output by the or each loudspeaker has an unobstructed path to the viewer, maximising the sound quality as perceived by the user.

In this regard, the sound bar 16 may have one or more apertures or ports 50 through which sound emitted by the loudspeaker(s) can pass. Such ports 50 may be completely open or for example covered with a light protective mesh material, as is common for such audio ports. In the example shown, there are two sets of ports 50a, 50b along the length of the sound bar 46. One of the sets of ports 50a is arranged so that they face the user when the stand 12 is in the first configuration (Fig. 7A). The other set of ports 50b is arranged so that they face the user when the stand 12 is in the second configuration (Fig. 7B). During rotation of the slider 36, neck 14 and base 16 between the first and second configurations, the free end of the base 16 and therefore the sound bar 46 effectively rotate about a horizontal axis. In this example, the rotation is through 90°, or approximately 90°. In any event, the two sets of ports 50 are angularly spaced by the same angle (for example 90° or approximately 90° in a specific example), such that one set of ports 50a, 50b or the other faces the user when the stand 12 is in the first configuration or the second configuration. Further, it may be noted that when the stand 12 is in the first configuration (Fig. 7A, for supporting the display device 10 on a generally horizontal surface), the first set of ports 50a are directed horizontally or at least generally horizontally so that they face the user and the second set of ports 50b are directed vertically or at least generally vertically so that they face upwards. This means that sound is directed horizontally towards the user and vertically upwards. This is convenient for the first configuration as the display device 10 will often be located relatively low down (on a table or stand for example) such that the sound bar 46 is below eye level. On the other hand, when the stand 12 is in the second configuration (Fig. 7B, for mounting the display device 10 to a generally vertical surface), the second set of ports 50b are directed horizontally or at least generally horizontally so that they face the user and the first set of ports 50a are directed vertically or at least generally vertically so that they face downwards. This means that sound is directed horizontally towards the user and vertically downwards. This is convenient for the second configuration as the display device 10 will often be located relatively high up (on a wall for example) such that the sound bar 46 is above eye level.

As an alternative to providing two set of ports 50, the sound bar 46 may have two sets of loudspeakers which are similarly angularly spaced so that one set of loudspeakers or the other faces the user when the stand 12 is in the first configuration or the second configuration and the other set of loudspeakers is directed vertically upwards or downwards respectively. This provides better sound quality, though at increased cost given the additional number of loudspeakers that are used.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A display device (10), the display device (10) having a front and a rear and comprising:
a housing (20);
a display screen (18) supported by the housing (20) to be located at the front of the display device (10), the housing (20) being at the rear of the display device (10); and
a stand (12), the stand (12) comprising a base (16) and a neck (14), wherein the neck (14) is connected to the housing (20) and the base (16) is connected to the neck (14);
the base (16) and the neck (14) being configurable relative to each other such that the stand (12) is configurable between a first configuration and a second configuration;
wherein in the first configuration, with the display screen (18) arranged generally vertically, the base (16) is below the display screen (18) and is generally horizontal such that the stand (12) is suitable for supporting the display device (10) on a generally horizontal surface with the base (16) on said generally horizontal surface; and
wherein in the second configuration, with the display screen (18) arranged generally vertically, the base (16) and the neck (14) are arranged generally vertically such that the display device (10) can be mounted to a generally vertical surface;
**characterised in that** the neck (14) is connected to the base (16) at an edge of the base (16) and **in that** the neck (14) is configurable such that, in the first configuration, the neck (14) is angled downwardly and rearwardly to extend to the rear of the display device (10) and the base (16) extends horizontally to extend to the front and to the rear of the display device (10).

2. A display device (10) according to claim 1, arranged such that in the second configuration, the base (16) and the neck (14) are generally collinear.

3. A display device (10) according to claim 1 or claim 2, arranged such that in the second configuration, the base (16) can be at least partially slid into the neck (14) to reduce the vertical extent of the stand (12).

4. A display device (10) according to any of claims 1 to 3, arranged such that the neck (14) can be at least partially slid into the housing (20) for the second configuration.

5. A display device (10) according to any of claims 1 to 4, the base (16) comprising at least one loudspeaker.

6. A display device (10) according claim 5, arranged such that in the first configuration, the loudspeaker is below and in front of the display screen (18).

7. A display device (10) according to claim 5 or claim 6, arranged such that in the second configuration, the loudspeaker is below the display screen (18).

8. A display device (10) according to any of claims 5 to 7, the base (16) comprising a plurality of loudspeakers, the loudspeakers and the base (16) being arranged such that in the first configuration, sound is directed generally horizontally from the front towards a viewer and generally vertically upwards, and such that in the second configuration, sound is directed generally horizontally from the front towards a viewer and generally vertically downwards.

9. A display device (10) according to any of claims 1 to 8, wherein the neck (14) is detachably connected to the housing (20) so that the neck (14) can be disconnected from the housing (20) and connected to the housing (20) again when the stand (12) is reconfigured between the first and second configurations.

10. A display device (10) according to any of claims 1 to 9, wherein the base (16) is detachably connected to the neck (14) so that the base (16) can be disconnected from the neck (14) and connected to the neck (14) again when the stand (12) is reconfigured between the first and second configurations.

11. A display device (10) according to any of claims 1 to 10, wherein the neck (14) and the base (16) are each provided with a number of sets of through holes (30) at different locations, and comprising locking pins (32) which in use are passed through one or other of the sets of through holes (30) in the neck (14) and the base (16) as appropriate to lock the neck (14) and the base (16) in the desired orientation relative to each other according to the first configuration or the second configuration.

12. A display device (10) according to any of claims 1 to 11, wherein the base (16) is connected to the neck (14) at one end of the neck (14), and comprising a slider (36) connected to the end of the neck (14), the slider (36) being slidably received in channels (24) at the rear of the display device (10) which guide sliding movement of the slider (36), wherein the slider (36) and the adjacent end of the neck (14) have a number of sets of through holes (40) at different locations, and comprising locking pins (42) which in use are passed through one set or the other of the through holes (40) to lock the neck (14) and the slider (36) in the desired orientation relative to each other according to the first configuration or the second configuration.

## Patentansprüche

1. Anzeigevorrichtung (10), wobei die Anzeigevorrichtung (10) eine Vorderseite und eine Rückseite hat und aufweist:
ein Gehäuse (20);
einen Anzeigebildschirm (18), der vom Gehäuse (20) getragen wird, um an der Vorderseite der Anzeigevorrichtung (10) angeordnet zu sein, wobei sich das Gehäuse (20) an der Rückseite der Anzeigevorrichtung (10) befindet; und
einen Ständer (12), wobei der Ständer (12) eine Basis (16) und einen Hals (14) aufweist, wobei der Hals (14) mit dem Gehäuse (20) verbunden ist und die Basis (16) mit dem Hals (14) verbunden ist;
wobei die Basis (16) und der Hals (14) relativ zueinander so konfigurierbar sind, dass der Ständer (12) zwischen einer ersten Konfiguration und einer zweiten Konfiguration konfigurierbar ist;
wobei in der ersten Konfiguration mit dem im Allgemein vertikal angeordneten Anzeigebildschirm (18) die Basis (16) unter dem Anzeigebildschirm (18) ist und im Allgemeinen so horizontal ist, dass der Ständer (12) geeignet ist zum Tragen der Anzeigevorrichtung (10) auf einer im Allgemeinen horizontalen Fläche mit der Basis (16) auf der im Allgemeinen horizontalen Fläche; und
wobei in der zweiten Konfiguration mit dem im Allgemeinen vertikal angeordneten Anzeigebildschirm (18) die Basis (16) und der Hals (14) im Allgemeinen so vertikal angeordnet sind, dass die Anzeigevorrichtung (10) an einer im Allgemeinen vertikalen Fläche montiert werden kann;
**dadurch gekennzeichnet, dass** der Hals (14) an einer Kante der Basis (16) mit der Basis (16) verbunden ist und dass der Hals (14) so konfigurierbar ist, dass in der ersten Konfiguration der Hals (14) nach unten und nach hinten abgewinkelt ist, um sich zur Rückseite der Anzeigevorrichtung (10) zu erstrecken, und die Basis (16) sich horizontal erstreckt, um sich zur Vorderseite und zur Rückseite der Anzeigevorrichtung (10) zu erstrecken.

2. Anzeigevorrichtung (10) nach Anspruch 1, die so angeordnet ist, dass in der zweiten Konfiguration die Basis (16) und der Hals (14) im Allgemeinen kollinear sind.

3. Anzeigevorrichtung (10) nach Anspruch 1 oder Anspruch 2, die so angeordnet ist, dass in der zweiten Konfiguration die Basis (16) zumindest teilweise in den Hals (14) geschoben werden kann, um die vertikale Erstreckung des Ständers (12) zu verringern.

4. Anzeigevorrichtung (10) nach einem der Ansprüche 1 bis 3, die so angeordnet ist, dass der Hals (14) für die zweite Konfiguration zumindest teilweise in das Gehäuse (20) eingeschoben werden kann.

5. Anzeigevorrichtung (10) nach einem der Ansprüche 1 bis 4, wobei die Basis (16) wenigstens einen Lautsprecher aufweist.

6. Anzeigevorrichtung (10) nach Anspruch 5, die so angeordnet ist, dass sich der Lautsprecher in der ersten Konfiguration unter und vor dem Anzeigebildschirm (18) befindet.

7. Anzeigevorrichtung (10) nach Anspruch 5 oder Anspruch 6, die so angeordnet ist, dass sich der Lautsprecher in der zweiten Konfiguration unter dem Anzeigebildschirm (18) befindet.

8. Anzeigevorrichtung (10) nach einem der Ansprüche 5 bis 7, wobei die Basis (16) mehrere Lautsprecher aufweist, wobei die Lautsprecher und die Basis (16) so angeordnet sind, dass in der ersten Konfiguration Schall im Allgemeinen horizontal von der Vorderseite zu einem Betrachter und im Allgemeinen vertikal nach oben gerichtet ist, und so, dass in der zweiten Konfiguration Schall im Allgemeinen horizontal von der Vorderseite zu einem Betrachter und im Allgemeinen vertikal nach unten gerichtet ist.

9. Anzeigevorrichtung (10) nach einem der Ansprüche 1 bis 8, wobei der Hals (14) lösbar mit dem Gehäuse (20) verbunden ist, sodass der Hals (14) vom Gehäuse (20) getrennt und wieder mit dem Gehäuse (20) verbunden werden kann, wenn der Ständer (12) zwischen den ersten und zweiten Konfigurationen umkonfiguriert wird.

10. Anzeigevorrichtung (10) nach einem der Ansprüche 1 bis 9, wobei die Basis (16) lösbar mit dem Hals (14) verbunden ist, sodass die Basis (16) vom Hals (14) getrennt und wieder mit dem Hals (14) verbunden werden kann, wenn der Ständer (12) zwischen den ersten und zweiten Konfigurationen umkonfiguriert wird.

11. Anzeigevorrichtung (10) nach einem der Ansprüche 1 bis 10, wobei der Hals (14) und die Basis (16) jeweils mit einer Anzahl von Sätzen von Durchgangslöchern (30) an verschiedenen Stellen versehen sind und Verriegelungsstifte (32) aufweisen, die im Gebrauch durch einen oder einen anderen der Sätze von Durchgangslöchern (30) in dem Hals (14) und der Basis (16) geführt werden, um den Hals (14) und die Basis (16) in der gewünschten Ausrichtung relativ zueinander gemäß der ersten Konfiguration oder der zweiten Konfiguration zu verriegeln.

12. Anzeigevorrichtung (10) nach einem der Ansprüche 1 bis 11, wobei die Basis (16) mit dem Hals (14) an einem Ende des Halses (14) verbunden ist, und aufweisend einen Schieber (36), der mit dem Ende des Halses (14) verbunden ist, wobei der Schieber (36) verschiebbar in Kanälen (24) an der Rückseite der Anzeigevorrichtung (10) aufgenommen ist, die eine Gleitbewegung des Schiebers (36) führen, wobei der Schieber (36) und das benachbarte Ende des Halses (14) eine Anzahl von Sätzen von Durchgangslöchern (40) an verschiedenen Stellen haben, und aufweisend Verriegelungsstifte (42), die im Gebrauch durch einen oder den anderen Satz der Durchgangslöcher (40) geführt werden, um den Hals (14) und den Schieber (36) in der gewünschten Ausrichtung relativ zueinander gemäß der ersten Konfiguration oder der zweiten Konfiguration zu verriegeln.

## Revendications

1. Dispositif d'affichage (10), le dispositif d'affichage (10) ayant un devant et un derrière et comprenant :
un boîtier (20) ;
un écran d'affichage (18) supporté par le boîtier (20) pour se situer sur le devant du dispositif d'affichage (10), le boîtier (20) étant sur le derrière du dispositif d'affichage (10) ; et
un support (12), le support (12) comprenant une base (16) et un col (14), le col (14) étant relié au boîtier (20) et la base (16) étant reliée au col (14) ;
la base (16) et le col (14) pouvant être configurés l'un par rapport à l'autre de sorte que le support (12) peut être configuré entre une première configuration et une deuxième configuration,
dans lequel, dans la première configuration, avec l'écran d'affichage (18) agencé généralement verticalement, la base (16) est sous l'écran d'affichage (18) et est généralement horizontale de sorte que le support (12) peut être adapté pour supporter le dispositif d'affichage (10) sur une surface généralement horizontale avec la base (16) sur ladite surface généralement horizontale, et
dans lequel, dans la deuxième configuration, avec l'écran d'affichage (18) agencé généralement verticalement, la base (16) et le col (14) sont agencés généralement verticalement de sorte que le dispositif d'affichage (10) peut être monté sur une surface généralement verticale,
**caractérisé en ce que** le col (14) est relié à la base (16) au niveau d'un bord de la base (16) et **en ce que** le col (14) peut être configuré de sorte que, dans la première configuration, le col (14) est incliné vers le bas et vers l'arrière pour s'étendre jusqu'au derrière du dispositif d'affichage (10), et la base (16) s'étend horizontalement pour s'étendre jusqu'au devant et jusqu'au derrière du dispositif d'affichage (10).

2. Dispositif d'affichage (10) selon la revendication 1, lequel est agencé de sorte que, dans la deuxième configuration, la base (16) et le col (14) sont généralement colinéaires.

3. Dispositif d'affichage (10) selon la revendication 1 ou 2, lequel est agencé de sorte que, dans la deuxième configuration, il est possible de glisser au moins partiellement la base (16) dans le col (14) pour réduire l'étendue verticale du support (12).

4. Dispositif d'affichage (10) selon l'une quelconque des revendications 1 à 3, lequel est agencé de sorte qu'il est possible de glisser au moins partiellement le col (14) dans le boîtier (20) pour la deuxième configuration.

5. Dispositif d'affichage (10) selon l'une quelconque des revendications 1 à 4, dans lequel la base (16) comprend au moins un haut-parleur.

6. Dispositif d'affichage (10) selon la revendication 5, lequel est agencé de sorte que, dans la première configuration, le haut-parleur est sous et devant l'écran d'affichage (18).

7. Dispositif d'affichage (10) selon la revendication 5 ou 6, lequel est agencé de sorte que, dans la deuxième configuration, le haut-parleur est sous l'écran d'affichage (18).

8. Dispositif d'affichage (10) selon l'une quelconque des revendications 5 à 7, dans lequel la base (16) comprend une pluralité de haut-parleurs, les haut-parleurs et la base (16) étant agencés de sorte que, dans la première configuration, le son est dirigé généralement horizontalement du devant vers un spectateur et généralement verticalement vers le haut, et tel que, dans la deuxième configuration, le son est dirigé généralement horizontalement du devant vers un spectateur et généralement verticalement vers le bas.

9. Dispositif d'affichage (10) selon l'une quelconque des revendications 1 à 8, dans lequel le col (14) est relié de manière amovible au boîtier (20) de sorte qu'il est possible de déconnecter le col (14) du boîtier (20) et de le relier à nouveau au boîtier (20) lorsque le support (12) est reconfiguré entre les première et deuxième configurations.

10. Dispositif d'affichage (10) selon l'une quelconque des revendications 1 à 9, dans lequel la base (16) est reliée de manière amovible au col (14) de sorte qu'il est possible de déconnecter la base (16) du col (14) et de la relier à nouveau au col (14) lorsque le support (12) est reconfiguré entre les première et deuxième configurations.

11. Dispositif d'affichage (10) selon l'une quelconque des revendications 1 à 10, dans lequel le col (14) et la base (16) sont chacun pourvus d'un certain nombre d'ensembles de trous traversants (30) à des emplacements différents, et comprenant des goupilles de verrouillage (32) qui, en utilisation, sont passées à travers l'un ou l'autre des ensembles de trous traversants (30) dans le col (14) et dans la base (16) selon le cas pour verrouiller le col (14) et la base (16) dans l'orientation souhaitée par rapport à chacun d'eux selon la première configuration ou la deuxième configuration.

12. Dispositif d'affichage (10) selon l'une quelconque des revendications 1 à 11, dans lequel la base (16) est reliée au col (14) à une extrémité du col (14), et comprenant un coulisseau (36) relié à l'extrémité du col (14), le coulisseau (36) étant reçu de manière coulissante dans des canaux (24) sur le derrière du dispositif d'affichage (10) qui guident le mouvement de coulissement du coulisseau (36), dans lequel le coulisseau (36) et l'extrémité adjacente du col (14) ont un certain nombre d'ensembles de trous traversants (40) à des emplacements différents, et comprenant des goupilles de verrouillage (42) qui, en utilisation, sont passées à travers l'un ou l'autre des trous traversants (40) pour verrouiller le col (14) et le coulisseau (36) dans l'orientation souhaitée par rapport à chacun d'eux selon la première configuration ou la deuxième configuration.
